# EUROPÄISCHE PATENTSCHRIFT

(11) **EP 3 544 833 B1**
(45) Veröffentlichungstag und Bekanntmachung des Hinweises auf die Patenterteilung: **22.09.2021**
(21) Anmeldenummer: 17829930.1
(22) Anmeldetag: 24.11.2017
(51) Int. Cl.: B60C 23/12

(54) **VERDICHTERANORDNUNG MIT WULSTZYLINDERKURVE**
COMPRESSOR ASSEMBLY COMPRISING A BEADED CYLINDRICAL CAM
ENSEMBLE COMPRESSEUR COMPRENANT UNE CAME CYLINDRIQUE DE TALON

(30) Priorität: 24.11.2016 DE 102016122739
(43) Veröffentlichungstag der Anmeldung: 02.10.2019
(73) Patentinhaber: KT Projektentwicklungs-GmbH, 74072 Heilbronn (DE); Illinois Tool Works Inc., Glenview, IL 60025 (US)
(72) Erfinder: TSIBERIDIS, Konstantin, 74199 Untergruppenbach (DE)
(74) Vertreter: Trinks, Ole
(86) Internationale Anmeldenummer: PCT/EP2017/080390
(87) Internationale Veröffentlichungsnummer: WO 2018/096111

(56) Entgegenhaltungen:
- EP-A1- 1 881 197
- WO-A1-2015/063679
- JP-A- 2007 039 013

## Beschreibung

Die Erfindung betrifft eine Verdichteranordnung zur Druckmittelversorgung einer Reifenkavität eines Reifens, nach dem Oberbegriff des Anspruchs 1.

Eine gattungsgemäße Verdichteranordnung ist aus der EP1881197 A1 bekannt.

Die Reifenkavität des Reifens ist also Teil eines auf einer Radnabe montierbaren Fahrzeugrads, wobei die Radnabe um eine Rotationsachse drehbar an einem Radträger gelagert ist.

Zur Befüllung einer Reifenkavität eines Fahrzeugreifens mit einem Druckmittel, wie etwa Druckluft, ist es bekannt, ein Reifenventil am Fahrzeugrad vorzusehen, über welches das Druckmittel in die Reifenkavität eingebracht werden kann. Bei Fahrzeugen, wie Personenkraftwagen, Lastkraftwagen oder Nutzfahrzeugen, sind Reifenventile üblicherweise im Bereich einer Felge, auf der der Reifen montiert ist, so angeordnet, dass sie von außen leicht zugänglich sind.

An das Reifenventil kann eine fahrzeugexterne Druckmittelquelle angeschlossen werden, etwa mittels einer Schlauchleitung, um so den Reifendruck, insbesondere auf manuelle Weise, kontrollieren und gegebenenfalls korrigieren zu können.

Ferner sind fahrzeugseitige Druckmittelversorgungssysteme bekannt, die es gestatten, die Druckmittelbefüllung der Reifenkavität eines Fahrzeugreifens autonom vorzunehmen. Hierzu ist es bekannt von einer zentralen, fahrzeugseitig bereitgestellten Druckmittelquelle, beispielsweise einem Kompressor oder einem Druckspeicher, Druckmittelleitungen bis zu den Rädern vorzusehen und in die Reifenkavität zu führen. Beim Übergang von gegenüber dem Fahrzeug drehfesten Bauteilen, wie dem Radträger, auf die sich im Fahrbetreib drehenden Räder werden sogenannte Drehdurchführungen realisiert, die eine Druckmittelbefüllung auch während der Fahrt, d.h. bei sich drehenden Rädern, ermöglichen. Auf diese Weise kann der Reifendruck z.B. an veränderte Beladungsverhältnisse, Fahrbahnoberflächen und Umgebungstemperaturen angepasst werden oder Leckagen bspw. über Diffusion ausgeglichen werden.

Ein Problem der bekannten Systeme ist, dass bei fahrzeugexternen Druckmittelquellen jeweils gehalten und der Druck in allen Reifenkavitäten aufwändig geprüft werden muss. Bei den bekannten fahrzeugseitigen Druckmittelquellen, die über Drehdurchführungen Druckmittel an die Reifenkavität fördern, stellt die Betriebssicherheit der Drehdurchführungen für das Druckmittel ein Problem dar. Die Drehdurchführungen lassen sich nur mit sehr hohem Aufwand derart robust und langlebig fertigen, dass sie ein Fahrzeugleben lang halten, was teuer und unwirtschaftlich ist.

Aufgabe der vorliegenden Erfindung ist es, eine Verdichteranordnung zu schaffen, die zuverlässig und wartungsarm über ein gesamtes Fahrzeugleben hinweg eine Befüllung der Reifenkavität mit Druckmittel sicherstellt.

Vorzugsweise arbeitet die Verdichteranordnung dabei automatisiert. Unter automatisiert ist dabei zu verstehen, dass hier kein Anhalten und Verwenden einer fahrzeugexternen Druckmittelquelle nötig ist. Die Aufnahme des Betriebs der erfindungsgemäßen Verdichteranordnung kann jedoch autonom, d.h. über eine beliebig gestaltete Regel- oder Steueranordnung im Fahrzeug erfolgen oder auf ein Steuersignal durch den Fahrzeugführer hin.

Diese Aufgabe wird durch eine Verdichteranordnung nach Anspruch 1 gelöst. Die erfindungsgemäße Verdichteranordnung kennzeichnet sich dadurch, dass die Verdichteranordnung wenigstens einen nabenseitigen Kompressionsraum umfasst, dessen Volumen durch eine translatorische Bewegung eines Verdichterbauteils veränderbar ist, wobei durch eine Volumenverminderung des Kompressionsraums ein in die Reifenkavität zu leitendes Druckmittel unter Druck setzbar ist, und wobei die Verdichteranordnung ein Getriebe, vorzugsweise ein Kurvengetriebe, umfasst, das eingerichtet ist, um durch ein Zusammenwirken eines radträgerseitigen Getriebeteils mit einem nabenseitigen Getriebeteil eine Rotationsbewegung zwischen Radträgerseite und Radnabenseite in eine oszillierende translatorische Bewegung des Verdichterbauteils umzuwandeln, wobei das radträgerseitige Getriebeteil eine Zylinderkurve insbesondere eine Wulstzylinderkurve umfasst oder das nabenseitige Getriebeteil eine Wulstzylinderkurve umfasst.

Eine derartige Verdichteranordnung hat den Vorteil, dass sie aufgrund ihrer rein mechanisch möglichen Bauweise sehr robust ausgeführt sein kann. Durch die nabenseitige Anordnung des Kompressionsraus wird das unter Druck stehende Druckmittel direkt am sich drehenden Teil des Fahrzeugrades bereitgestellt, sodass eine Drehdurchführung für das Druckmittel nicht notwendig ist. Mit anderen Worten wird das Druckmittel direkt am Einsatzort also an der sich drehenden Reifenkavität bereitgestellt.

Drehdurchführungen für Druckmittel sind schwierig zu gestalten und Ihre Zuverlässige und langfristig funktionsfähige Realisierung ist technisch anspruchsvoll. Die Realisierung solcher Druckmitteldrehdurchführungen wird überdies durch die widrigen Umstände im Bereich des Fahrzeugrades erschwert, da hier mit starken Verschmutzungen und stoßartigen Belastungen zu rechnen ist. Die erfindungsgemäße Verdichteranordnung ermöglicht es beim Fahrbetrieb des Fahrzeugs, in dem die Verdichteranordnung montiert ist, stets Druckmittel unter ausreichendem Druck zur Verfügung zu stellen und somit eine stets ausreichenden Füllung des Reifens sicherzustellen.

Von Vorteil ist, wenn die translatorische Bewegung des Verdichterbauteils wenigstens teilweise in Richtung der Rotationsachse, vorzugsweise vollständig in Richtung der Rotationsachse, erfolgt. Hierdurch kann die Verdichteranordnung besonders platzsparend in radialer Richtung also orthogonal zur Richtung der Rotationsachse bei großen Volumen des Kompressionsraums realisiert werden.

Im Kontext der vorliegenden Anmeldung sind unter Nabenseite und nabenseitigen Komponenten derartige Komponenten zu verstehen, die gegenüber der Radnabe drehfest angeordnet sind. Derartige Komponenten sind also unmittelbar oder mittelbar mit der Radnabe derart verbunden, dass sie sich bei einer Rotation der Radnabe relativ zum Radträger mit der Radnabe drehen. Der Radträger ist fahrzeugfest. Radträgerseite und radträgerseitige Komponenten sind damit gegenüber dem Radträger drehfest. Bei einer Rotation des Rades bzw. der Radnabe erfolgt also eine rotatorische Relativbewegung zwischen den radträgerseitigen Komponenten, bspw. der Fahrgastzelle des Fahrzeugs und dem Rad bzw. dem Reifen, der Radnabe und den weiteren nabenseitigen Komponenten.

Das nabenseitige Getriebeteil ist also stets drehfest mit den sich im Fahrbetreib des Fahrzeugs drehenden nabenseitigen Komponenten. Das radträgerseitige Getriebeteil ist jedenfalls dann, wenn die Verdichteranordnungen im Betrieb ist, jedoch vorzugsweise stets, drehfest mit dem Fahrzeug bzw. radträgerseitigen Komponenten.

Vorzugsweise ist das radträgerseitige Getriebeteil vollständig starr und unbeweglich, also weder rotatorisch noch translatorisch beweglich, gegenüber der Radträgerseite angeordnet.

Das radträgerseitige Getriebeteil ist also im am Fahrzeug angebrachten Zustand vollständig drehfest mit den radträgerseitigen Komponenten verbunden. Im Fahrbetrieb des Fahrzeugs dreht sich also kein Teil des radträgerseitigen Getriebeteils. Es drehen sich lediglich die nabenseitigen Komponenten, insbesondere das nabenseitige Getriebeteil dreht sich vollständig um die Rotationsachse.

Vorzugsweise ist eine der erfindungsgemäßen Verdichteranordnungen an jedem Rad eines Fahrzeugs angeordnet, sodass alle Räder des Fahrzeugs stets mit ausreichendem Druck in ihrer jeweiligen Reifenkavität versorgt sind. Da dementsprechend jedes Rad seine eigene Druckmittelversorgung umfasst, sind Drehdurchführungen zur Druckmittelversorgung überflüssig.

Gegenstand der vorliegenden Erfindung ist auch ein Fahrzeug, indem die beschriebene Verdichteranordnung verbaut ist.

Mit Freilaufbetriebslage ist im Folgenden ein Zustand der nabenseitigen und radträgerseitigen Getriebeelemente gemeint, indem diese nicht zusammenwirken, die Verdichteranordnung also nicht arbeitet. Mit Arbeitsbetriebslage ist ein Zustand der nabenseitigen und radträgerseitigen Getriebeelemente gemeint, indem diese zusammenwirken, und die Verdichteranordnung also arbeitet. Von Vorteil ist insbesondere, wenn das nabenseitige Getriebeteil einen Stößelabtrieb umfasst. Hierdurch kann die Verdichteranordnung platzsparend bei zuverlässiger Betriebsweise ausgeführt werden.

Vorzugsweise verläuft die oszillierende translatorische Bewegung des nabenseitigen Verdichterbauteils entlang der Rotationsachse. Hierdurch kann die Verdichteranordnung kompakt realisiert werden und Unwuchten werden vermieden.

Erfindungsgemäß ist, wenn das nabenseitige Getriebeteil eine Kontakteinrichtung umfasst, wobei die Kontakteinrichtung in Richtung der Rotationsachse gesehen je vor und hinter der Wulstzylinderkurve des radträgerseitigen Getriebeteils ein Kontaktelement zur Kontaktierung der Wulstzylinderkurve des radträgerseitigen Getriebeteils aufweist. Hierdurch ist der nabenseitige Getriebeteil formschlüssig mit dem radträgerseitigen Getriebeteil kontaktierbar bzw. in Zusammenwirkung bringbar.

Die Kontaktelemente zur Kontaktierung der Wulstzylinderkurve des radträgerseitigen Getriebeteils müssen dabei nicht ständig in Kontakt mit der Wulstzylinderkurve stehen sondern in bevorzugter Ausführungsform sind sie von dieser abhebbar. Dies stellt eine Ausführungsform einer Kupplungseinrichtung dar.

Bevorzugt ist, wenn die Kontaktelemente in eine Position vorgespannt sind, in der sie die Wulstzylinderkurve kontaktieren und zusätzlich Kupplungselemente vorgesehen sind die derart ausgeführt sind, dass sie, wenn eine Zusammenwirkung von radträgerseitigen Getriebeteil mit nabenseitigen Getriebeteil nicht gewünscht ist, die Kontaktelemente des nabenträgerseitigen Getriebeteils von der Wulstzylinderkurve entgegen ihrer Vorspannung abheben, wobei die Kupplungselemente vorzugsweise in die Stellung vorgespannt sind, in der sie die Kontaktelemente von der Wulstzylinderkurve abheben.

Vorteilhaft ist auch, wenn das nabenseitige Getriebeteil eine Kontakteinrichtung mit einem Kontaktelement zur Kontaktierung der Wulstzylinderkurve entlang einem variablen Kontaktabschnitt umfasst. Vorteilhafterweise ist hierzu das Kontaktelement in Richtung der Rotationsachse verschieblich gelagert, vorzugsweise und in eine Stellung vorgespannt, in der es die Wulstzylinderkurve nicht kontaktiert. Mit variablem Kontaktabschnitt ist damit gemeint, dass die genaue Lage der Kontaktierung des Kontaktelements mit der Wulstzylinderkurve, also die Lage des Kontaktabschnitts, nicht fest vorgegeben ist sondern im Betrieb der Verdichteranordnung, insbesondere zufällig variiert. Hierdurch wird eine verschleißbedingte Riefenbildung an der Wulstzylinderkurve verhindert. Zur Realisierung eines derartigen variablen Kontaktabschnitts kann die Position der Kontaktelemente beispielsweise durch ein Zusammenspiel einer Federvorspannung und einer Beaufschlagung mit Druckmittel festgelegt sein. Da die vom Druckmittel ausgeübte Kraft nie absolut konstant ist ergibt sich eine quasi flatternde Position der Kontaktelemente.

Vorteilhaft ist auch, wenn das Verdichterbauteil einen Ringkolben umfasst. Hierdurch kann bei geringem Bauraumbedarf ein großes Fördervolumen bzw. eine hohe Förderleistung der Verdichteranordnung realisiert werden.

In einer vorteilhaften Ausführungsform der erfindungsgemäßen Verdichteranordnung ist diese derart ausgebildet, dass entlang der Rotationsachse gesehen jeweils vor und hinter einem Kontaktabschnitt des nabenseitigen Getriebeteils mit der Zylinderkurve des radträgerseitigen Getriebeteils ein Kompressionsraum angeordnet ist. Hierdurch kann das Fördervolumen der erfindungsgemäßen Verdichteranordnung bzw. die Förderleistung besonders hoch realisiert werden.

Von Vorteil ist auch eine Ausführungsvariante bei der zwei Kompressionsräume vorgesehen sind, wobei sich das Volumen des einen Kompressionsraums verringert, wenn sich das Volumen des anderen Kompressionsraum vergrößert und umgekehrt. Hierdurch wird eine besonders kontinuierliche Förderleistung der Verdichteranordnung realisiert.

Von Vorteil ist auch, wenn das radträgerseitige Getriebeteil radial einwärts von dem nabenseitigen Getriebeteil angeordnet ist. Hierdurch kann die erfindungsgemäße Verdichteranordnung besonders platzsparend realisiert werden.

Vorteilhaft ist auch, wenn das radträgerseitige Getriebeteil radial auswärts von dem nabenseitigen Getriebeteil angeordnet ist. Hierdurch kann eine besonders mechanisch stabile Verdichteranordnung implementiert werden.

Von Vorteil ist auch, wenn das radträgerseitige Getriebeteil eine Wulstzylinderkurve mit einem Kreisscheibenabschnitt umfasst. Hierdurch kann ein sanftes Einkuppeln der Getriebeteile miteinander realisiert werden.

Vorteilhaft ist auch, wenn das nabenseitige Getriebeteil einen, vorzugsweise selbstschmierenden, insbesondere mit einem Schmiermittelreservoir versehenen, Rollenstößel umfasst. Hierdurch wird stets eine reibungsarme Kontaktierung zwischen nabenseitigem Getriebeteil und radträgerseitigem Getriebeteil gewährleistet.

Von Vorteil ist auch, wenn an dem Verdichterbauteil ein Flatterventil angeordnet ist. Dies stellt eine betriebssichere und kostengünstige Ausbildung eines einlassseitigen Rückschlagventils für das Verdichterbauteil da.

Vorteilhaft ist auch, wenn an dem Verdichterbauteil eine Doppelringdichtung angeordnet ist, die ein Schmiermittelreservoir des Verdichterbauteils begrenzt und gleichzeitig den Kompressionsraum gegen das Verdichterbauteil dichtet. Hierdurch kann die Verdichteranordnung platzsparend und kostengünstig implementiert werden.

Vorteilhaft ist auch, wenn das Flatterventil einstückig mit wenigstens einem Teil der Doppelringdichtung ausgebildet ist. Hierdurch wird die Anordnung besonders einfach zu warten und kostengünstig herstellbar.

Vorteilhaft ist auch, wenn die Verdichteranordnung ein Kupplungseinrichtung umfasst, mittels welcher das nabenseitige Getriebeteil in Zusammenwirkung mit dem radträgerseitigen Getriebeteil bringbar ist. Bei dieser Ausführungsform kann das Zusammenwirken zwischen nabenseitigem Getriebeteil und radträgerseitigem Getriebeteil also bei Bedarf unterbrochen bzw. eingeschalten werden.

Vorteilhaft ist auch, wenn die Kupplungseinrichtung derart ausgebildet ist, dass das nabenseitige Getriebeteil in eine Stellung vorgespannt ist, in der es nicht mit dem radträgerseitigen Getriebeteil zusammenwirkt. Die Verdichteranordnung kann also bei Bedarf zugeschaltet werden und kehrt automatisch in ihre Freilaufbetriebslage zurück.

Vorteilhaft ist auch, wenn die Kupplungseinrichtung pneumatisch, magnetisch oder elektromechanisch betätigbar ist. Insbesondere ist von Vorteil, wenn die Beteiligung pneumatisch erfolgt, da dies besonders zuverlässig ist.

Vorteilhafterweise sind im Bereich des Fahrzeugrades ein Akkumulator und/oder ein Generator angeordnet. Der Akkumulator kann über Schleifkontakte von der Hauptbatterie des Fahrzeugs geladen werden oder über den Generator, der eine rotatorische Relativbewegung zwischen Radträgerseite und Nabenseite in elektrische Energie umwandelt.

Vorteilhaft ist auch, wenn die Kupplungseinrichtung mittels Druckmittel aus der Reifenkavität betätigbar ist. Das unter Druck stehende Druckmittel aus der Reifenkavität stellt quasi einen stets verfügbaren Energiespeicher dar, der zum Kuppeln verwendet werden kann.

Vorteilhaft ist auch, wenn ein Kupplungsventil fluidisch zwischen Kupplungseinrichtung und Reifenkavität vorgesehen ist, an dem das Druckmittel aus der Reifenkavität anliegt und welches bei Unterschreiten eines Reifendruckschwellenwerts öffnet, wodurch die Kupplungseinrichtung mittels Druckmittel aus der Reifenkavität betätigt wird und das nabenseitige Getriebeteil in Zusammenwirkung mit dem radträgerseitigen Getriebeteil gebracht wird. Die Aufnahme des Betriebs der Verdichteranordnung erfolgt dabei automatisch, sobald eine Erhöhung des Reifendrucks nötig wird. Eine ausreichende Versorgung der Reifenkavität mit Druckmittel ist damit jederzeit sichergestellt.

Vorteilhaft ist auch, wenn das Kupplungsventil, bei Überschreiten eines Reifendrucksollwerts, vorzugsweise der über dem Reifendruckschwellenwert liegt, schließt, wodurch die Beaufschlagung der Kupplungseinrichtung mit Druckmittel unterbrochen wird, vorzugsweise wobei das Kupplungsventil oder ein Entlastungsventil bei Überschreiten des Reifendrucksollwerts die Kupplungseinrichtung entlüftet. Damit wird erreicht, dass die Verdichteranordnung ihren Betrieb direkt einstellt sobald ein Druckmittelsollwert in der Reifenkavität erreicht ist.

Vorteilhaft ist auch, wenn sie eine Einrichtung zur Messung und/oder Anzeige des Drucks, der Temperatur und/oder der Feuchtigkeit des Druckmittels in der Reifenkavität umfasst, vorzugsweise die über die Druckmittelleitung mit der Reifenkavität verbindbar ist. Hiermit können die Parameter des Druckmittels im Reifen ständig zuverlässig erfasst werden, da die Verdichteranordnung stets in Kontakt mit dem in der Reifenkavität befindlichen Druckmittel stehen kann.

Vorteilhaft ist, wenn die Verdichteranordnung druckmitteleinlassseitig mit einem Filter verbunden ist. Dies verhindert Verstopfungen der Verdichteranordnung.

Vorteilhaft ist, wenn die Verdichteranordnung ausgebildet ist, um Druckmittel aus der Reifenkavität oder über Förderung durch die Verdichteranordnung zum Reinigen des Filters zu verwenden. Hierdurch wird die Verdichteranordnung selbstwartend.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
Figur 1 zeigt schematisch eine Einbaulage einer erfindungsgemäßen Verdichteranordnung;
Figuren 2 bis 5 eine erste Ausführungsform mit einer radträgerseitigen Wulstzylinderkurve in verschiedenen Ansichten und Betriebszuständen;
Figuren 6 und 7 eine alternative Ausführungsform;
Figuren 8 und 9 eine weitere alternative Ausführungsform;
Figuren 10 bis 13 eine alternative Ausführungsform eines nabenseitigen Getriebeteils;
Figuren 14 und 15 eine weitere alternative Ausführungsform;
Figuren 16 und 17 eine weitere alternative Ausführungsform;
Figuren 18 bis 20 eine weitere alternative Ausführungsform;
Figur 21 eine weitere alternative Ausführungsform;
Figur 22 eine Übersicht einer Anordnung einer kontrolleinrichtung; und
Figur 23 eine Übersicht einer Anordnung eines Kupplungsventils

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

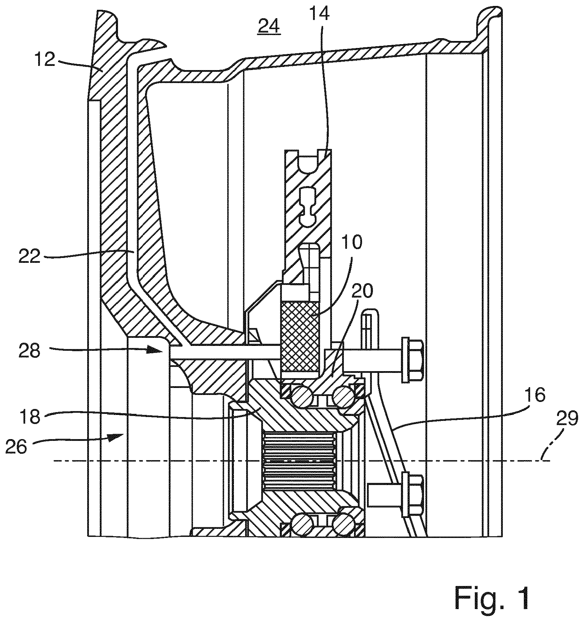

In Figur 1 ist die Einbaulage einer erfindungsgemäßen Verdichteranordnung 10 schematisch dargestellt. Die Verdichteranordnung 10 ist in Figur 1 nur schematisch durch eine kreuzschraffierte Fläche dargestellt.

Eine Felge trägt das Bezugszeichen 12. Eine Bremsscheibe das Bezugszeichen 14, ein Radträger das Bezugszeichen 16, eine Radnabe das Bezugszeichen 18 und ein Radlager trägt das Bezugszeichen 20.

Von der Verdichteranordnung 10 erstreckt sich eine Druckmittelleitung 22 bis zu einer Reifenkavität 24. Der Reifen selbst ist in Figur 1 nicht dargestellt.

Im Bereich einer Radnabenaufnahme 26 weist die Felge einen schematisch dargestellten Anschluss 28 zum Zuführen eines Abdichtmittels auf. Der Anschluss 28 ist dabei optional.

In der in Figur gezeigten Ausführungsform erstreckt sich die Druckmittelleitung 22 durch das Material der Felge 12. Forteilhafterweise ist ein Abschnitt der Druckmittelleitung 22 durch eine holgebohrte Bremsscheibenbefestigungsschraube der Bremsscheibe 14 realisiert. Eine Drehachse trägt das Bezugszeichen 29. Um die Drehachse 29 dreht sich beim Betrieb des Fahrzeugs die nabenseitige gegenüber der Radträgerseite.

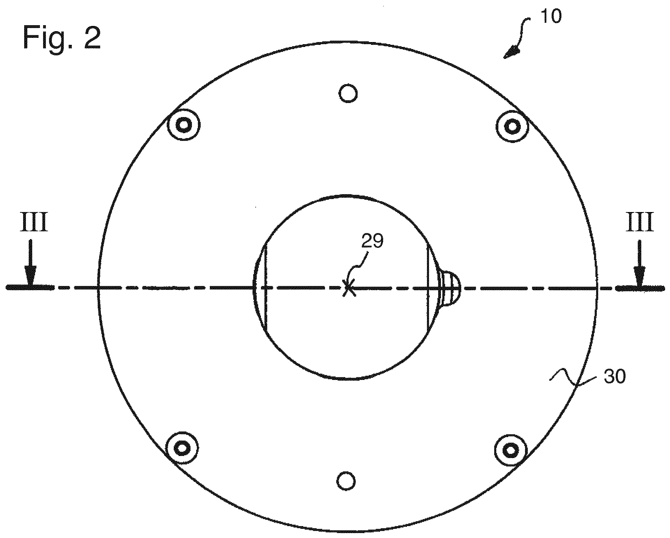

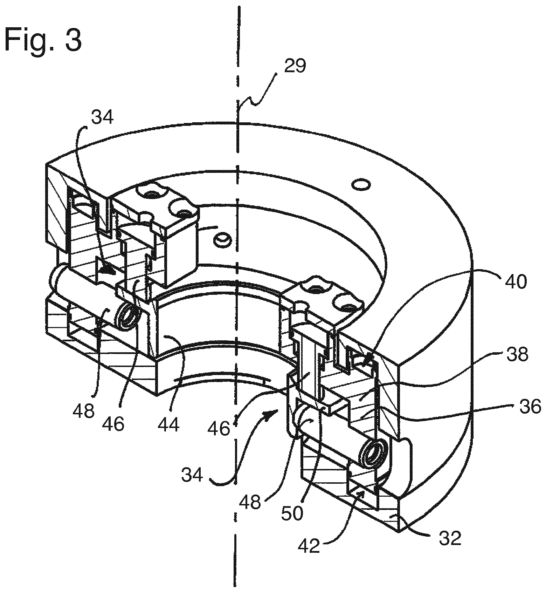

Figuren 2 bis 5 zeigen eine erste Ausführungsform in verschiedenen Ansichten, wobei die Verdichteranordnung 10 in Figur 2 in einer Draufsicht dargestellt ist. In Figur 3 ist die Verdichteranordnung 10 entlang der Linie III-III geschnitten dargestellt.

Die Verdichteranordnung umfasst ein erstes nabenseitiges Gehäuseteil 30 sowie ein zweites nabenseitiges Gehäuseteil 32.

Nabenseitige Getriebeteile tragen das Bezugszeichen 34. In Figur 3 sind zwei der nabenseitigen Getriebeteile 34 der Verdichteranordnung 10 erkennbar.

Mit den nabenseitigen Getriebeteilen 34 ist ein Ringkolben 36 verbunden, der ein Verdichterbauteil 38 darstellt. Das Verdichterbauteil 38 in Form des Ringkolbens 36 begrenzt einen ersten Kompressionsraum 40 sowie einen zweiten Kompressionsraum 42.

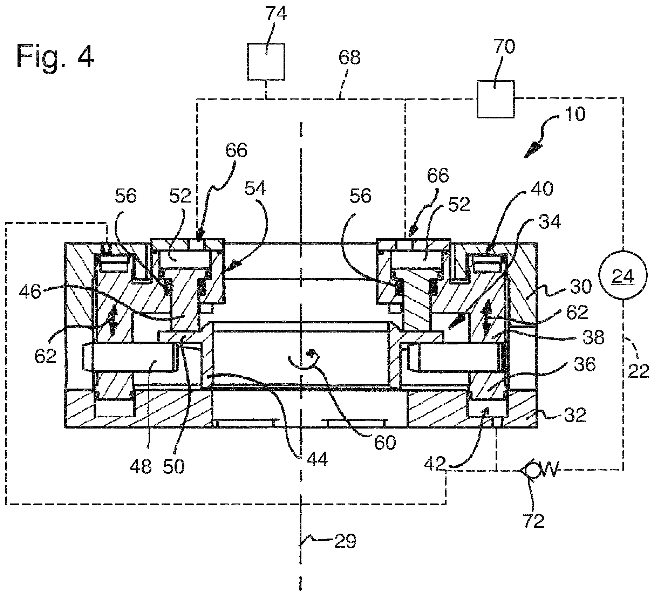

Die nabenseitigen Getriebeelemente 34 stehen, in der in Figur 3 und 4 gezeigten Arbeitsbetriebslage, mit einem radträgerseitigen Getriebeteil 44 derart in Eingriff, dass sie mit diesen zusammenwirken können. Die nabenseitigen Getriebeelemente 34 bilden gemeinsam mit dem radträgerseitigen Getriebeteil 44 ein Kurvengetriebe 45, wobei das nabenseitige Getriebeelemente 34 einen Stößelabtrieb bildet.

Die nabenseitigen Getriebeteile 34 weisen jeweils ein erstes aktuierbares Kontaktelement 46 und ein zweites feststehendes Kontaktelement 48 auf.

Die Kontaktelemente 46, 48 der jeweiligen nabenseitigen Getriebeteile 34 stehen mit einer Wulstzylinderkurve 50 des radträgerseitigen Getriebeteils 44 in Kontakt, wodurch das nabenseitige Getriebeteil 34 mit dem radträgerseitigen Getriebeteil 44 zusammenwirkt.

Wie bereits oben erwähnt sind die ersten Kontaktelemente 46 aktuierbar. Dies ist deutlich in Figur 4 ersichtlich. Die ersten Kontaktelemente stellen zusammen mit einem ihnen jeweils zugeordneten Druckraum 52 eine Kupplungseinrichtung 54 dar.

Durch Betätigung der Kupplungseinrichtung 54 können die nabenseitigen Getriebeteile 34 in Zusammenwirkung mit dem radträgerseitigen Getriebeteil 44 gebracht werden. Bei Unterbrechung der Betätigung der Kupplungseinrichtung 54 kann eine Zusammenwirkung der nabenseitigen Getriebeteile 34 mit dem radträgerseitigen Getriebeteil 44 verhindert werden.

In Figur 3 und 4 ist die Kupplungseinrichtung 54 jeweils im betätigten bzw. eingekuppelten Zustand gezeigt. Die Verdichteranordnung 10 befindet sich damit in einer Arbeitsbetriebslage.

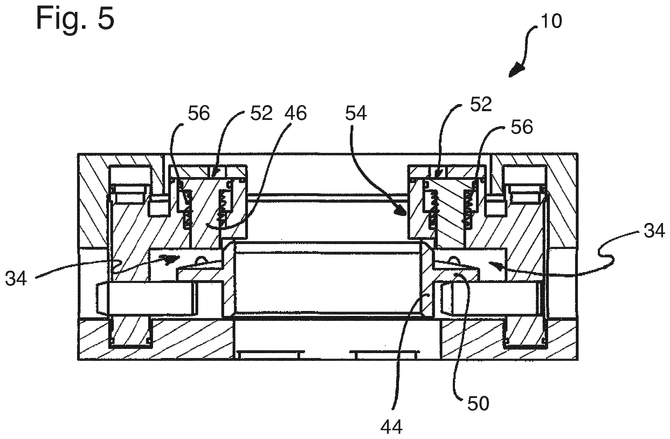

In Figur 5 ist die Kupplungseinrichtung 54 in einem nicht betätigten bzw. ausgekuppelten Zustand gezeigt. Die Verdichteranordnung 10 befindet sich damit in einer Freilaufbetriebslage.

In dieser Freilaufbetriebslage kontaktieren die ersten aktuierbaren Kontaktelemente 46 die Zylinderwulstkurve 50 des radträgerseitigen Getriebeteils 44 nicht. Die nabenseitigen Getriebeteile 34 sind damit an einem Zusammenwirken mit dem radträgerseitigen Getriebeteil 44 gehindert.

Um die Verdichteranordnung 10 von der in Figur 5 gezeigten Freilaufbetriebslage in die Arbeitsbetriebslage zu überführen werden die Druckräume 52 mit Druckmittel beaufschlagt.

Die ersten, aktuierbaren Kontaktelemente 46 sind Kolbenartig ausgebildet und bewegen sich durch die Beaufschlagung mit Druckmittel in Richtung der Wulstzylinderscheibe 50 und kontaktieren diese. Dieser Zustand ist in Figur 3 und 4 dargestellt.

Die ersten, aktuierbaren Kontaktelemente 46 sind über Druckfedern 56 derart vorgespannt, dass sie die Verdichteranordnung 10 in eine Freilaufbetriebslage überführen, wenn die Druckräume 52 nicht mit Druckmittel beaufschlagt sind. Die Kupplungseinrichtung 54 ist also in eine nicht betätigte Stellung vorgespannt.

Bei fahrendem Fahrzeug findet eine rotatorische Relativbewegung des radträgerseitigen Getriebeteils 44 gegenüber dem nabenseitigen Getriebeteil 34 um die Rotationsachse 29 herum statt.

Dies ist durch den gekrümmten Pfeil mit dem Bezugszeichen 60 in Figur 4 illustriert.

In der Arbeitsbetriebslage der Verdichteranordnung 10 wird durch das Zusammenwirken des radträgerseitigen Getriebeteils 44 mit den nabenträgerseitigen Getriebeteilen 34 der Ringkolben 36 bzw. das durch ihn gebildete Verdichterbauteil 38 entlang der Rotationsachse 29 auf- und abbewegt, was durch die Doppelpfeile mit dem Bezugszeichen 62 angedeutet ist. Durch die oszillierende translatorische Bewegung des Ringkolbens 36 wird jeweils bei einer Auf- und Ab-Bewegung Druckmittel aus den ringförmigen Kompressionsräumen 40 und 42 gefördert.

Anhand Figur 4 wird die Ansteuerung der Verdichteranordnung 10 schematisch erläutert.

Die Einlässe 66 der Druckräume 52 sind jeweils über einen Abschnitt 68 einer Druckmittelleistung 22 über ein Ventil 70, das ein Kupplungsventil bildet mit der Reifenkavität 24 verbunden. Das Kupplungsventil 70 ist derart ausgestaltet, dass es öffnet, wenn der Druck im Reifen unter einen Druckschwellenwert fällt.

Die Druckräume 52 werden dann mit Druckmittel aus der Reifenkavität 24 beaufschlagt. Die ersten aktuierbaren Kontaktelemente 46 werden dann gegen die Vorspannung der Federn 56 in Richtung der Zylinderwulstkurve 50 bewegt und kontaktieren diese.

Durch die rotatorische Relativbewegung zwischen den radträgerseitigen Getriebeteil 44 und dem nabenseitigen Getriebeteil 34 und die Zusammenwirkung der beiden Getriebeteile wird also die oszillatorische Translationsbewegung des Verdichterbauteils 38 bzw. des Ringkolbens 36 erzeugt. Die oszillatorische Translationsbewegung des Verdichterbauteils 38 verringert jeweils alternierend die Volumina der Kompressionsräume 40 und 42 wodurch Druckmittel aus diesen zur Reifenkavität 24 gefördert wird.

Die Druckräume 40 und 42 sind über ein Rückschlagventil 72 mit der Reifenkavität 24 verbunden. Das Rückschlagventil 72 öffnet dabei zur Reifenkavität 24 hin.

Erreicht der Druck des Druckmittels in der Reifenkavität 24 einen Sollwert oder überschreitet diesen, so schließt das Kupplungsventil 70 und der Leitungsabschnitt 68 zwischen Kupplungsventil 70 und den Druckräumen 52 wird über ein Entlastungsventil 74 entlüftet. Hierdurch bewegen sich die aktuierbaren Kontaktelemente 46 aufgrund ihrer Vorspannung von der Zylinderwulstkurve 50 weg in die in Figur 5 gezeigte Stelle.

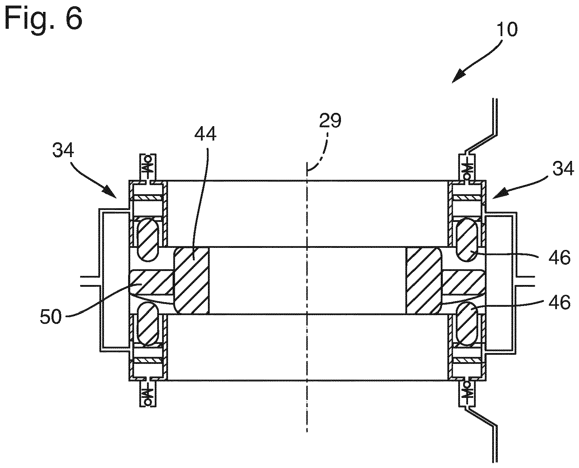

Die Figuren 6 bis 9 zeigen eine weitere Ausführungsform der erfindungsgemäßen Verdichteranordnung 10. Das radträgerseitige Getriebeteil umfasst wiederum eine Zylinderwulstkurve 50.

Im Unterschied zur vorigen Ausführungsform umfasst das nabenseitige Getriebeteil 34 bei dieser Ausführungsform kein feststehendes Kontaktelement 48 sondern zwei aktuierbare Kontaktelemente 46 von denen jeweils eines in Richtung der Rotationsachse 29 gesehen vor und hinter der Wulstzylinderkurve 50 angeordnet ist.

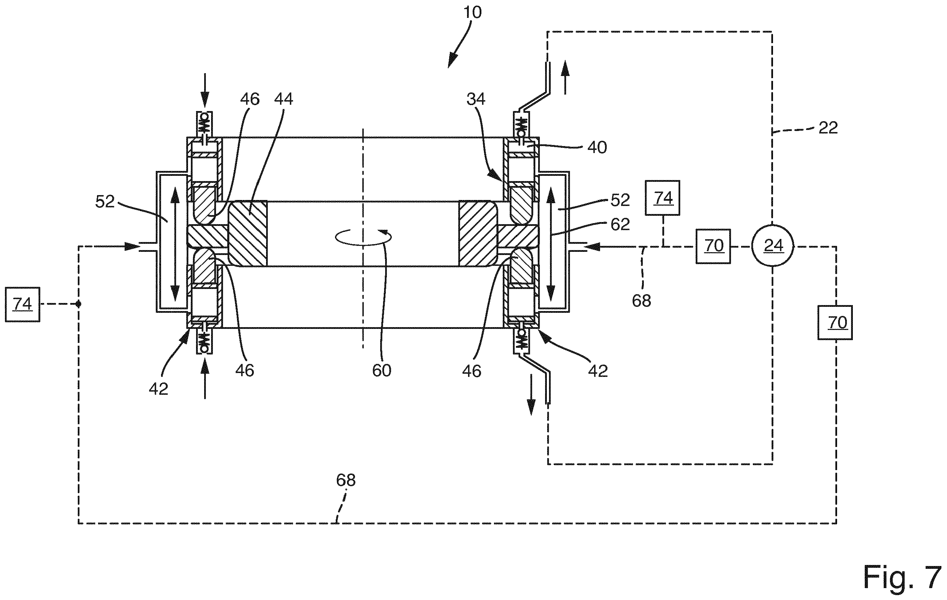

In Figur 6 ist die Verdichteranordnung 10 dieser Ausführungsform in einer Freilaufbetriebslage dargestellt und in Figur 7 in einer Arbeitsbetriebslage.

Die Verdichteranordnung 10 der Figuren 6 und 7 unterscheidet sich außerdem von der vorigen Verdichteranordnung 10 gemäß den Figuren 2 bis 5 dadurch, dass jeder der Druckräume 52, über welchen die aktuierbaren Kontaktelemente 46 mit Druckmittel beaufschlagbar und aktuierbar sind über ein eigenständigen Leitungsabschnitt 68 mit eigenständigem Kupplungsventil 70 und Entlastungsventil 74 mit der Reifenkavität 24 verbunden ist. Die Funktionsprinzipien der Kupplungsventile 70 und Entlastungsventile 74 sind jedoch gleich wie bei der vorigen Ausführungsform gemäß den Figuren 2 bis 5.

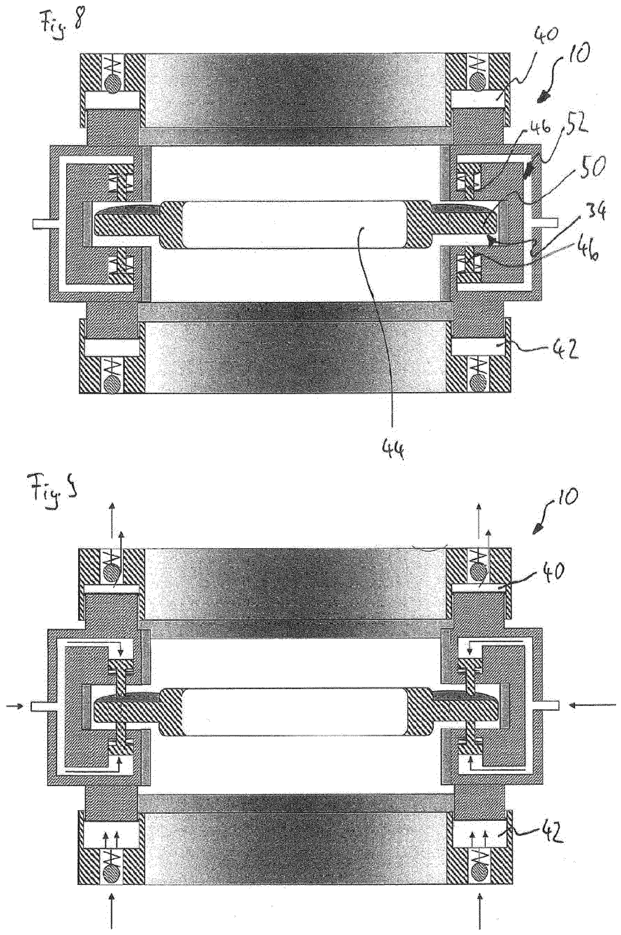

Figur 8 und 9 zeigen eine weitere Ausführungsform der erfindungsgemäßen Verdichteranordnung 10. Die Druckmittelleitungen 68 und 22 sind in Figur 8 und 9 nicht eingezeichnet genauso wie die Kupplungsventile 70, 74 und die Reifenkavität 24.

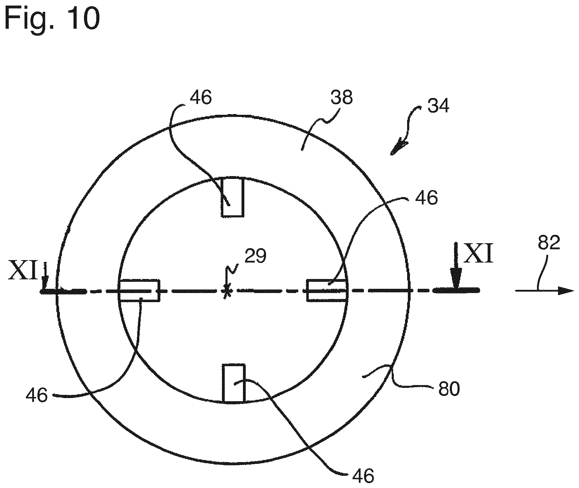

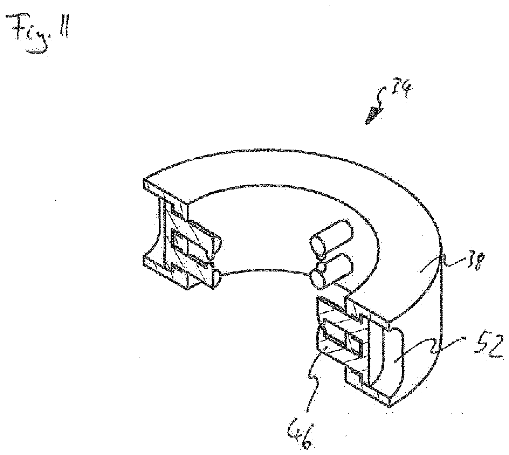

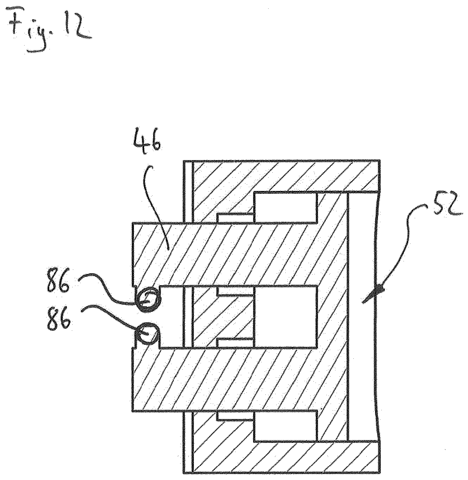

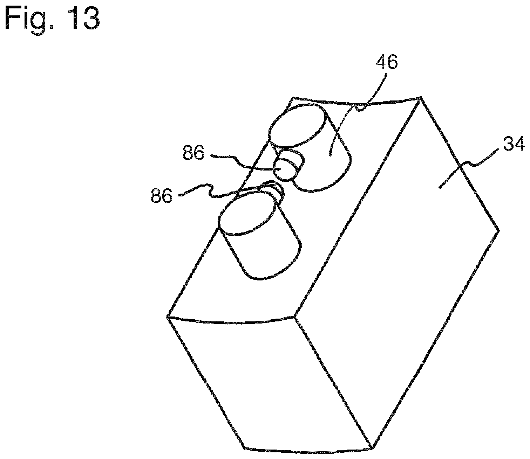

In den Figuren 10 bis 13 ist eine alternative Ausgestaltung des nabenseitigen Getriebeteils 34 im Detail dargestellt. Das nabenseitige Getriebeteil 34 gemäß Figuren 10 bis 13 umfasst vier aktuierbare Kontaktelemente 46 die an einem ringförmigen Halteabschnitt 80 angeordnet sind, der gleichzeitig als Verdichterbauteil 38 fungieren kann.

Die aktuierbaren Kontaktelemente 46 dieser Ausführungsform sind nicht in Richtung der Rotationsachse 29 beweglich sondern in radialer Richtung 82. Die Kontaktelemente 46 fahren also bei Betätigung der Kupplungseinrichtung 54 in radialer Richtung auf die Zylinderwulstkurve 50 auf. Hierzu weisen die Kontaktelemente 46 jeweils zwei rotierbare Kugelabschnitte 86 auf. Die rotierbaren Kugelabschnitte 86 können selbstschmierend mit einem Schmiermittelreservoir in den Kontaktelementen 46 ausgeführt sein.

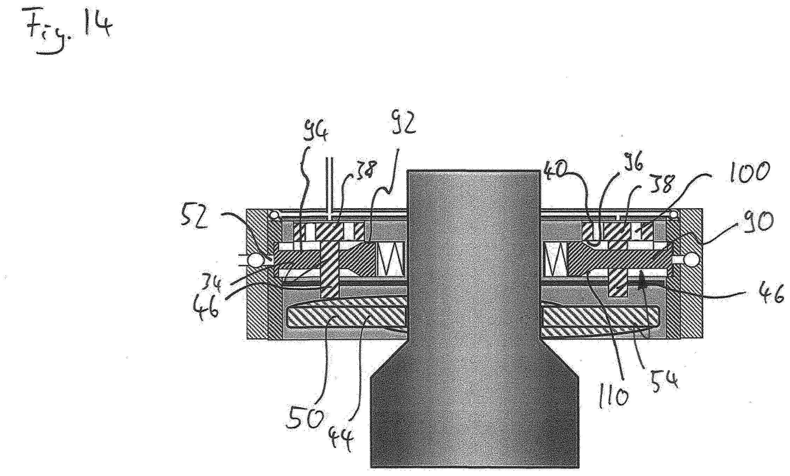

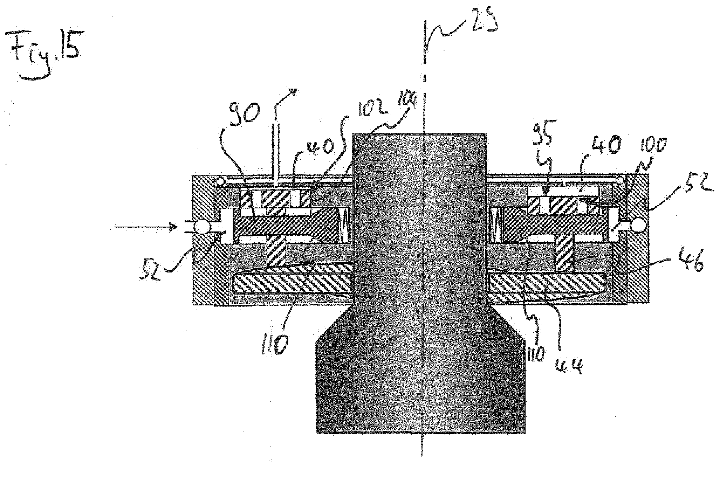

In den Figuren 14 und 15 ist eine weiter alternative Ausführungsform der erfindungsgemäßen Verdichteranordnung 10 gezeigt. In der Ausführungsform gemäß Figur 14 und 15 der Verdichteranordnung 10 ist die Kupplungseinrichtung 54 über ein Federvorgespanntes Kupplungsglied 90 realisiert. Das Kupplungsglied 90 weist einen Sperrabschnitt 92 und einen Freigabeabschnitt 94 auf.

In der in Figur 14 gezeigten Freilaufbetriebslage sind die Kupplungselemente 90 nicht über den Druckraum 52 beaufschlagt und der Sperrabschnitt 92 kontaktiert einen Anschlagsabschnitt 96 der Kontaktelemente 46. Der Anschlagsabschnitt 96 der Kontaktelemente 46 ist durch eine dem Kompressionsraum 40 abgewandte Seite des Verdichterbauteils 38 gebildet. Die Kontaktelemente 46 bilden in dieser Ausführungsform das nabenseitige Getriebeteil 34.

Werden die Druckräume 52 mit Druck beaufschlagt wie in Figur 15 gezeigt, so bewegen sich die Kupplungselemente 90 nach radial innen und der Sperrabschnitt 92 steht nicht mehr in Kontakt mit dem Anschlagsabschnitt 96 sondern der Freigabeabschnitt 94 liegt in Richtung der Rotationsachse 29 gesehen unter dem Verdichterbauteil 38. Eine Bewegung des Kontaktelements 46 entlang der Rotationsachse 29 ist dann möglich.

Die Kontaktelemente 46 sind in eine Stellung vorgespannt, in der Sie die Wulstzylinderkurve 50 des radträgerseitigen Getriebeteils 44 kontaktieren. Die Vorspannung ist über eine in den Figuren 14 und 15 nicht dargestellte Feder realisiert. An dem Verdichterbauteil der Ausführungsform gemäß den Figuren 14 und 15 sind Kanäle 100 ausgebildet, welche zum Kompressionsraum 40 hin mit nicht im Detail gezeigten Flatterventilen 95 ausgebildet sind. Die Flatterventile öffnen bei Bewegung des Verdichterbauteils 38 zur Wulstzylinderkurve 50 hin und schließen bei einer Bewegung des Verdichterbauteils 38 entlang der Rotationsachse 29 von der Wulstzylinderkurve 50 weg.

Vorteilhafterweise sind die Flatterventile 95 mit einer Doppelringdichtung 102 verbunden. Die Doppelringdichtung 102 erstreckt sich um das Verdichterbauteil 38 herum und begrenzt vorteilhafterweise beidseitig ein Schmiermittelreservoir 104 über das das Verdichterbauteil 38 mit Schmiermittel versorgt wird.

An den Kupplungselementen 90 sind Übergangsabschnitte 110 ausgebildet die einen Übergang zwischen den Sperrabschnitt 92 und den Freigabeabschnitt 94 bilden. Die Übergangsabschnitte 110 sind dabei derart ausgebildet, dass sie, wenn die Kupplungselemente 90 nicht mit Druckmittel beaufschlagt werden, durch ihre Federvorspannung derart in ihre in Figur 14 dargestellten Position zurückkehren, dass sie die Verdichterbauteile 38 in Richtung der Rotationsachse 29 gesehen derart von der Wulstzylinderkurve 50 wegdrängen, dass die Kontaktelemente 46 nicht mehr in Kontakt mit der Wulstzylinderkurve 50 stehen, unabhängig davon in welcher Stellung sich das radträgerseitige Getriebeteil 44 mit der Wulstzylinderkurve 50 befindet. Mit anderen Worten die Kupplungselemente 90 sind derart ausgebildet und vorgespannt, dass sie, wenn die Kupplungseinrichtung 54 nicht betätigt wird die nabenseitigen Getriebeteile 34 in eine Position drängen, in der sie nicht nur nicht mit dem radträgerseitigen Getriebeteil 44 zusammenwirken sondern vollständig von diesem abgehoben sind d.h. nicht in Kontakt mit diesem kommen können.

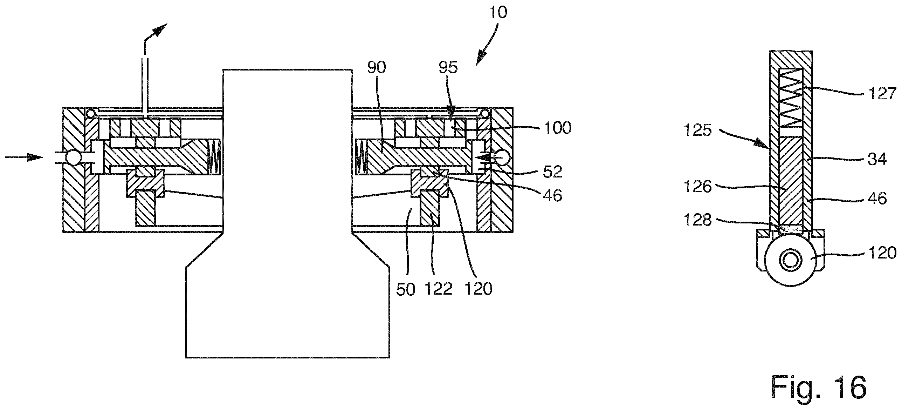

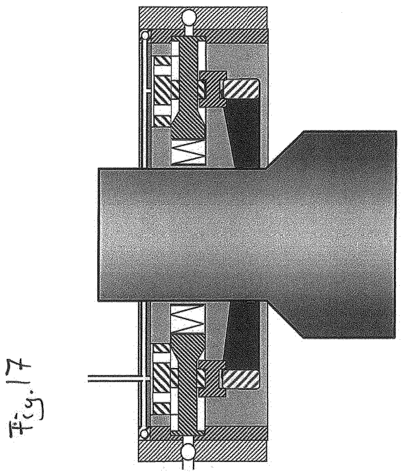

Eine weitere Ausführungsform der erfindungsgemäßen Verdichteranordnung 10 ist in Figur 16 in Arbeitsbetriebslage und in Figur 17 in Freilaufbetriebslage gezeigt. Die hier gezeigte Ausführungsform unterscheidet sich von der Ausführungsform gemäß den Figur 14 und 15 dadurch, dass an den aktuierbaren Kontaktelementen 46 selbstschmierende Rollen 120 ausgebildet sind.

Die Wulstzylinderkurve 50 weist einen Führungsabschnitt 122 für die Rollen 120 auf. Den Rollen ist ein Schmiermittelreservoir 125 zugeordnet, das sich in dem aktuierbaren Kontaktelement 46 also dem nabenseitigen Getriebeteil 34 befindet. Das Schmiermittel 126 in dem Schmiermittelreservoir ist in Richtung der Rollen 46, vorliegend durch eine Feder 127 vorgespannt.

Zwischen Rolle 120 und dem Schmiermittelreservoir ist ein Auslaufschutz 128 angeordnet, der derart ausgebildet ist, dass unabhängig von den Betriebszuständen, beispielsweise bei Erwärmung, das Schmiermittel 126 nur in einer zur Schmierung nötigen Menge aus dem Schmiermittelreservoir 125 austritt.

Diese Ausführung einer selbstschmierenden Rolle 120 kann mit allen beschriebenen Ausführungsformen dieser Erfindung kombiniert werden.

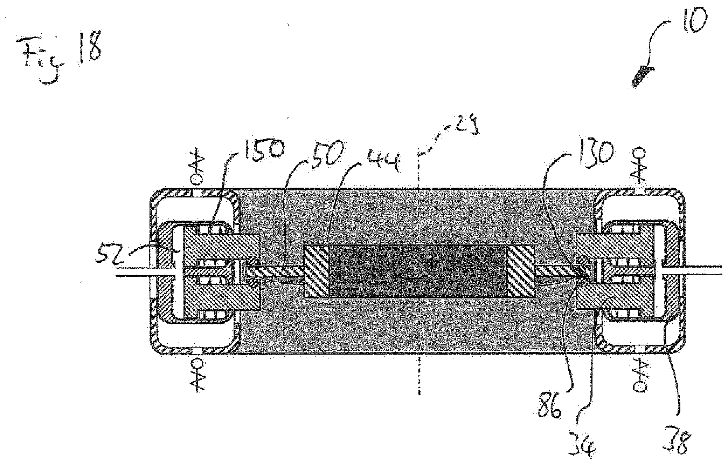

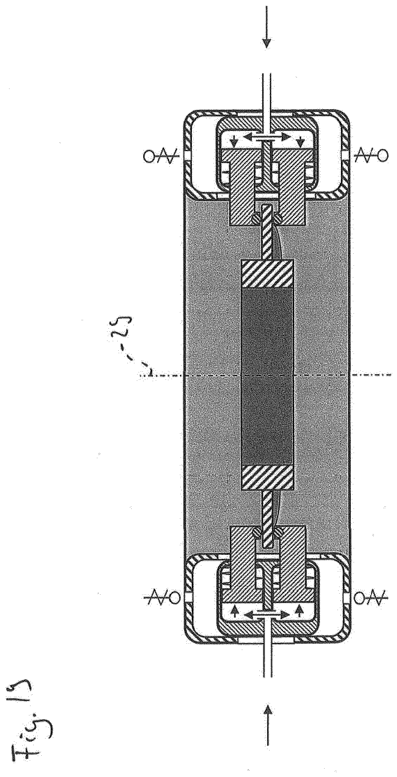

Eine weitere alternative Ausführungsform der erfindungsgemäßen Verdichteranordnung 10 ist den Figuren 18 bis 20 gezeigt.

Die Ausführungsform der Figuren 18 bis 20 umfasst das in den Figuren 10 bis 13 gezeigte nabenseitige Getriebeteil 34. Die Wulstzylinderkurve 50 umfasst an ihrem radial äußeren Rand einen Kreisscheibenabschnitt 130.

In Figur 18 sind die Rollen 86 der aktuierbaren Kontaktelemente 46 in Anlage an dem Kreisscheibenabschnitt 130 gezeigt. Die Verdichteranordnung 10 befindet sich in Figur 18 in einer Freilaufstellung, da die Rotationsbewegung des radträgerseitigen Getriebeteils 44 nicht in eine oszillierende translatorische Bewegung des nabenseitigen Getriebeteils 34 sowie das Verdichterbauteil 38 umgewandelt wird.

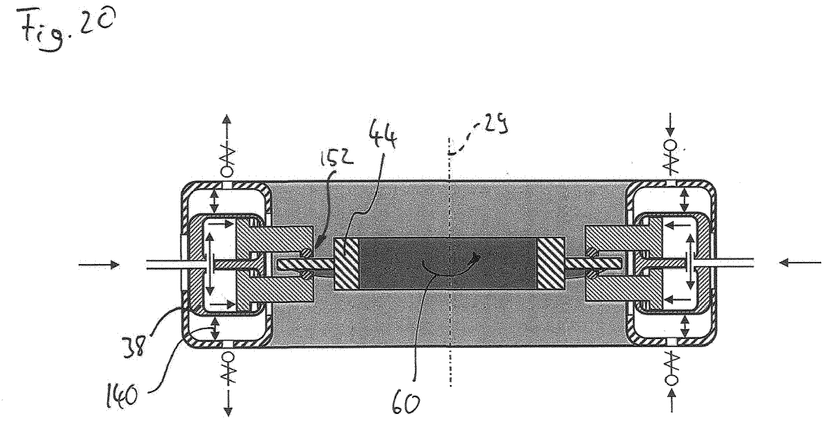

Zur Überführung der Verdichteranordnung 10 von der Freilaufbetriebslage von Figur 18 in die Arbeitsbetriebslage, wie sie in Figur 20 dargestellt ist, werden die Druckräume 52 mit Druckmittel beaufschlagt. Dies führt zu einer radial nach innen gerichteten Bewegung der nabenseitigen Getriebeteile 34. Die Kugelabschnitte 86 erlauben eine Bewegung der nabenseitigen Getriebeteile 34 von dem Kreisscheibenabschnitt 130 auf die Wulstzylinderkurve 50. Wie durch die Pfeile in Figur 20 dargestellt, wird dann die Rotationsbewegung 60 des radträgerseitigen Getriebeteils 44 in eine oszillierende translatorische Bewegung des Verdichterbauteils 38 umgewandelt. Das nabenseitige Getriebeteil 34 steht bei dieser Ausführungsform also immer in Kontakt mit dem radträgerseitigen Getriebeteil 44, es wirkt mit diesem aber nur zusammen, wenn es von dem Kreisscheibenabschnitt 130 auf die Wulstzylinderkurve 50 geschoben ist.

Die nabenseitigen Getriebeteile 34 sind derart über eine Feder 150 vorgespannt, dass die Druckbeaufschlagung über die Druckräume 52 zu einer radial nach innen gerichteten Bewegung der nabenseitigen Getriebeteile 34 führt. Die Bewegung geht jedoch lediglich soweit, dass die nabenseitigen Getriebeteile 34 nicht in Anschlag geraten.

Die genaue radiale Position der Kugelabschnitte 86 ist dadurch nicht festgelegt und ein variabler Kontaktabschnitt 152 zwischen dem durch die Kugelabschnitte 86 ausgebildeten Kontaktelement 46 und der Wulstzylinderkurve 50 wird realisiert.

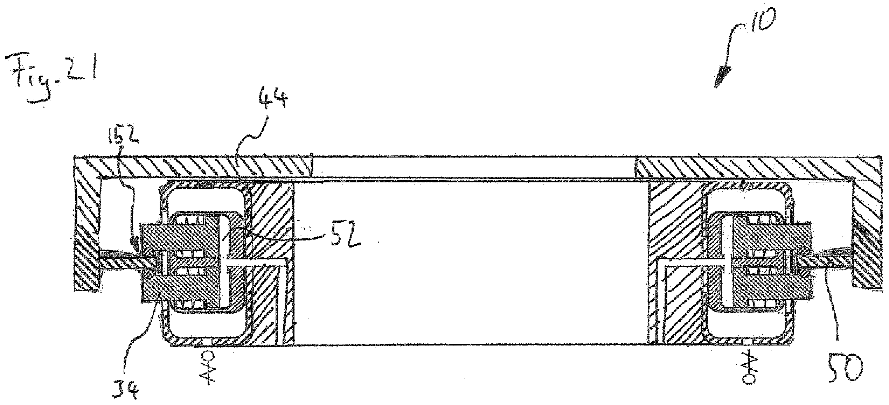

Figur 21 zeigt eine erfindungsgemäße Verdichteranordnung 10 einer alternative Ausführungsform, die der Ausführungsform von Figur 18 bis 20 ähnelt, bei der das radträgerseitige Getriebeteil 44 jedoch radial außen angeordnet ist und das nabenseitige Getriebeteil 34 radial innen. Auch die Kontakteinrichtung der Ausführungsform gemäß Figur 21 zeigt einen variablen Kontaktabschnitt 152 mit der Wulstzylinderkurve 50 auf.

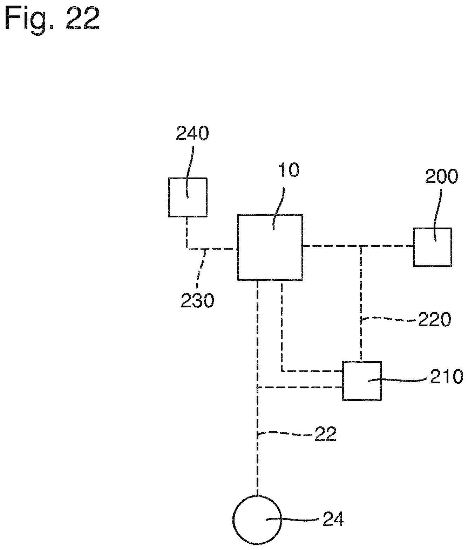

Wie in Figur 22 gezeigt, kann die Verdichteranordnung 10 allgemein mit einem Filter 200 und einer Kontrolleinrichtung 210 verbunden sein. Der Filter 200 ist dabei vorzugweise derart angeordnet, dass er fluidisch vor den Druckmitteleinlässen bzw. Lufteinlässen der Verdichteranordnung 10 angeordnet ist.

Über eine Messverbindung 220 kann die Kontrolleinrichtung 210 erfassen, wenn der Filter 200 verstopft ist. Wird eine Verstopfung des Filters 200 durch die Kontrolleinrichtung 210 erfasst, so kann der Filter dadurch gereinigt werden, dass er in umgekehrter Strömungsrichtung mit Druckmittel bzw. Luft beaufschlagt wird. In der üblichen Betriebsweise der Verdichteranordnung 10 wird Luft über den Filter 200 in Richtung der Verdichteranordnung 10 und von dort zur Reifenkavität 24 gefördert. In einem Reinigungsvorgang wird Druckmittel bzw. Luft entweder aus der Reifenkavität 24 abgelassen und in umgekehrter Strömungsrichtung durch den Filter 200 gefördert oder die Verdichteranordnung 10 nimmt ihren Betrieb auf und fördert Druckmittel statt zur Reifenkavität 24 in umgekehrter Strömungsrichtung zum Filter 200. Hierzu saugt die Verdichteranordnung 10 Druckmittel über einen zusätzlichen Einlass 230 ein, der einen weiteren Luftfilter 240 aufweist, der in ähnlicher Weise gereinigt werden kann.

Vorteilhafterweise kann die Kontrolleinrichtung 210 zur Messung und/oder Anzeige des Drucks, der Temperatur und/oder der Feuchtigkeit des Druckmittels in der Reifenkavität 24 dienen, wobei diese Funktionen unabhängig von den weiteren Funktionen der Kontrolleinrichtung 210 sind.

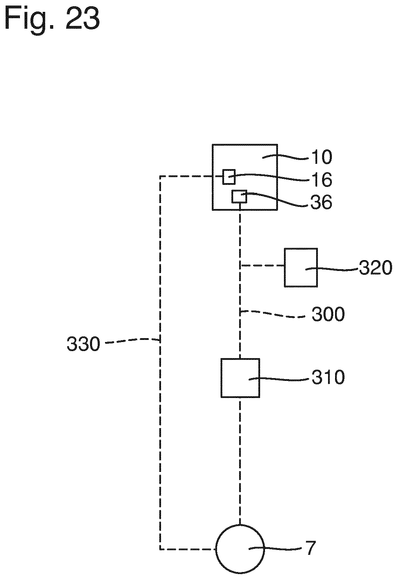

In Figur 23 ist eine beispielhafte Variante der Ansteuerung der Kupplungseinrichtung 54 dargestellt. Die Betätigung der Kupplungseinrichtung 54 kann jedoch auch elektrisch elektromagnetisch oder elektromechanisch erfolgen. Hierzu kann elektrische Energie von der Hauptbatterie des Fahrzeugs oder von einem dort vorgesehenen Generator oder einer anderen Energiequelle, über Schleifkontakte zur Nabenseite geführt werden.

Denkbar ist jedoch auch die Anordnung eines Generators auf der Nabenseite, der elektrische Energie aus der rotatorische Relativbewegung zwischen Nabenseite und Radträgerseite gewinnt. Ebenso denkbar ist die Anordnung von Akkumulatoren auf der Nabenseite insbesondere in den Speichen der Felge 1.

Die Verdichteranordnung 10, insbesondere deren Kupplungseinrichtung 54, ist über eine Kupplungsdruckmittelleitung 300 mit der Reifenkavität 24 verbunden. In der Kupplungsdruckmittelleitung 300 ist ein Kupplungsventil 310 angeordnet. An der Kupplungsdruckmittelleitung 300 ist überdies ein Entlastungsventil 320 vorgesehen. Die Kompressionsräume 40, 42 der Verdichteranordnung 10 sind über eine zur Förderung vorgesehenen Druckmittelleitung 330 mit der Reifenkavität 24 verbunden.

Am Kupplungsventil 310 liegt das Druckmittel der Reifenkavität 24 unter dem im Reifen herrschenden Druck an. Bei Unterschreiten eines Reifendruckschwellenwerts öffnet das Kupplungsventil 310, wodurch die Kupplungseinrichtung 54 mittels Druckmittel aus der Reifenkavität 24 betätigt wird und das nabenseitige Getriebeteil 34 in Zusammenwirkung mit dem radträgerseitigen Getriebeteil 44 gebracht wird.

Fährt das Fahrzeug, findet also eine rotatorische Relativbewegung zwischen Nabenseite und Radträgerseite statt, so wird Druckmittel aus den Kompressionsräumen 40, 42 zur Reifenkavität 24 über die zur Förderung vorgesehene Druckmittelleitung 330 gefördert.

Die Kupplungsdruckmittelleitung 300 und die zur Förderung vorgesehenen Druckmittelleitung 330 können auch gemeinsam als eine einzige Leitung ausgeführt sein.

Bei Überschreiten eines Reifendrucksollwerts, der vorzugsweise über dem Reifendruckschwellenwert liegt, schließt das Kupplungsventil 310, wodurch die Beaufschlagung der Kupplungseinrichtung 54 mit Druckmittel unterbrochen wird. Vorzugsweise wird die Kupplungseinrichtung 54 über das Kupplungsventil 310 oder das Entlastungsventil 320 bei Überschreiten des Reifendrucksollwerts entlüftet. Damit wird sichergestellt, dass die Verdichteranordnung 10 ihren Betrieb direkt einstellt sobald ein Druckmittelsollwert in der Reifenkavität 24 erreicht ist.

Diese Betriebsart der Kupplungseinrichtung 54 ist mit sämtlichen Ausführungsformen und einzelnen Aspekten dieser Ausführungsformen der Verdichteranordnung 10 dieser Anmeldung kombinierbar.

## Patentansprüche

1. Verdichteranordnung (10) zur Druckmittelversorgung einer Reifenkavität (24) eines Reifens eines auf einer Radnabe (18) montierbaren Fahrzeugrads, wobei die Radnabe (18) um eine Rotationsachse (29) drehbar an einem Radträger (16) lagerbar ist, wobei die Verdichteranordnung (10) wenigstens einen nabenseitigen Kompressionsraum (40, 42) umfasst, dessen Volumen durch eine translatorische Bewegung eines Verdichterbauteils (36, 38) veränderbar ist, wobei durch eine Volumenverminderung des Kompressionsraums (40, 42) ein in die Reifenkavität (24) zu leitendes Druckmittel unter Druck setzbar ist, und wobei die Verdichteranordnung (10) ein Getriebe, vorzugsweise ein Kurvengetriebe (45), umfasst, das eingerichtet ist, um durch ein Zusammenwirken eines radträgerseitigen Getriebeteils (44) mit einem nabenseitigen Getriebeteil (34) eine Rotationsbewegung (60) zwischen Radträgerseite und Radnabenseite in eine oszillierende translatorische Bewegung (62) des Verdichterbauteils (36, 38) umzuwandeln, wobei das radträgerseitige Getriebeteil (44) eine Zylinderkurve (50), insbesondere eine Wulstzylinderkurve (50), umfasst oder das nabenseitige Getriebeteil (34) eine Wulstzylinderkurve (50) umfasst,
**dadurch gekennzeichnet, dass**
das nabenseitige Getriebeteil (34) eine Kontakteinrichtung (46, 48) umfasst, wobei die Kontakteinrichtung (46, 48) in Richtung der Rotationsachse (29) gesehen je vor und hinter der Wulstzylinderkurve (50) des radträgerseitigen Getriebeteils (44) ein Kontaktelement (46, 48) zur Kontaktierung der Wulstzylinderkurve (50) des radträgerseitigen Getriebeteils (44) aufweist.

2. Verdichteranordnung (10) nach Anspruch 1, wobei
das nabenseitige Getriebeteil (34) einen Stößelabtrieb (34) umfasst.

3. Verdichteranordnung (10) nach Anspruch 1 oder 2, wobei
die translatorische Bewegung des Verdichterbauteils (36, 38) wenigstens teilweise in Richtung der Rotationsachse (29), vorzugsweise vollständig in Richtung der Rotationsachse (29), erfolgt.

4. Verdichteranordnung (10) nach einem der vorangegangenen Ansprüche,
wobei das nabenseitige Getriebeteil (34) eine Kontakteinrichtung (46) mit einem Kontaktelement (46) zur Kontaktierung der Wulstzylinderkurve (50) entlang einem variablen Kontaktabschnitt (152) umfasst.

5. Verdichteranordnung (10) nach einem der vorangegangenen Ansprüche,
wobei das Verdichterbauteil (38) einen Ringkolben (36) umfasst.

6. Verdichteranordnung (10) nach einem der vorangegangenen Ansprüche,
wobei entlang der Rotationsachse (29) gesehen jeweils vor und hinter einem Kontaktabschnitt (152) des nabenseitigen Getriebeteils (34) mit der Zylinderkurve (50) des radträgerseitigen Getriebeteils (44) ein Kompressionsraum (40, 42) angeordnet ist.

7. Verdichteranordnung (10) nach einem der vorangegangenen Ansprüche,
wobei das radträgerseitige Getriebeteil (44) radial einwärts von dem nabenseitigen Getriebeteil (34) angeordnet ist; oder
das radträgerseitige Getriebeteil (44) radial auswärts von dem nabenseitigen Getriebeteil (34) angeordnet ist.

8. Verdichteranordnung (10) nach einem der vorangegangenen Ansprüche,
wobei das radträgerseitige Getriebeteil (44) eine Wulstzylinderkurve (50) mit einem Kreisscheibenabschnitt (130) umfasst.

9. Verdichteranordnung (10) nach einem der vorangegangenen Ansprüche,
wobei das nabenseitige Getriebeteil (34) einen Rollenstößel mit einer, vorzugsweise selbstschmierenden, Rolle (120), insbesondere die mit einem Schmiermittelreservoir (125) versehenen ist, umfasst.

10. Verdichteranordnung (10) nach einem der vorangegangenen Ansprüche,
wobei an dem Verdichterbauteil (36, 38) ein Flatterventil (95) angeordnet ist; und/oder
an dem Verdichterbauteil (38, 36) eine Doppelringdichtung (102) angeordnet ist, die ein Schmiermittelreservoir des Verdichterbauteils begrenzt und gleichzeitig den Kompressionsraum gegen das Verdichterbauteil dichtet.

11. Verdichteranordnung (10) nach Anspruch 10,
wobei das Flatterventil (95) einstückig mit wenigstens einem Teil der Doppelringdichtung (102) ausgebildet ist.

12. Verdichteranordnung (10) nach einem der vorangegangenen Ansprüche,
wobei sie ein Kupplungseinrichtung (54) umfasst, mittels welcher das nabenseitige Getriebeteil (34) in Zusammenwirkung mit dem radträgerseitigen Getriebeteil (44) bringbar ist.

13. Verdichteranordnung (10) nach einem der vorangegangenen Ansprüche,
wobei die Kupplungseinrichtung (54) derart ausgebildet ist, dass das nabenseitige Getriebeteil (34) in eine Stellung vorgespannt ist, in der es nicht mit dem radträgerseitigen Getriebeteil (44) zusammenwirkt; und/oder
die Kupplungseinrichtung (54) pneumatisch, magnetisch oder elektromechanisch betätigbar ist; und/oder
die Kupplungseinrichtung (54) mittels Druckmittel aus der Reifenkavität (24) betätigbar ist.

14. Verdichteranordnung (10) nach einem der vorangegangenen Ansprüche,
wobei ein Kupplungsventil (70, 310) fluidisch zwischen Kupplungseinrichtung (54) und Reifenkavität (24) vorgesehen ist, an dem das Druckmittel aus der Reifenkavität (24) anliegt und welches bei Unterschreiten eines Reifendruckschwellenwerts öffnet, wodurch die Kupplungseinrichtung (54) mittels Druckmittel aus der Reifenkavität (24) betätigt wird und das nabenseitige Getriebeteil (34) in Zusammenwirkung mit dem radträgerseitigen Getriebeteil (44) gebracht wird, wobei vorzugsweise das Kupplungsventil (70), bei Überschreiten eines Reifendrucksollwerts, vorzugsweise der über dem Reifendruckschwellenwert liegt, schließt, wodurch die Beaufschlagung der Kupplungseinrichtung (54) mit Druckmittel unterbrochen wird, vorzugsweise wobei das Kupplungsventil (70, 310) oder ein Entlastungsventil (74, 320) bei Überschreiten des Reifendrucksollwerts die Kupplungseinrichtung (54) entlüftet.

15. Verdichteranordnung (10) nach einem der vorangegangenen Ansprüche,
wobei sie eine Einrichtung (210) zur Messung und/oder Anzeige des Drucks, der Temperatur und/oder der Feuchtigkeit des Druckmittels in der Reifenkavität (24) umfasst, vorzugsweise die über die Druckmittelleitung (22) mit der Reifenkavität (24) verbindbar ist; und/oder
sie druckmitteleinlassseitig mit einem Filter (200) verbunden ist; und/oder sie ausgebildet ist, um Druckmittel aus der Reifenkavität (24) oder über Förderung durch die Verdichteranordnung (10) zum Reinigen des Filters (200) zu verwenden.

## Claims

1. Compressor assembly (10) for supplying pressure medium to a tyre cavity (24) of a tyre of a vehicle wheel which can be mounted on a wheel hub (18), wherein the wheel hub (18) can be mounted on a wheel carrier (16) so as to be rotatable about an axis of rotation (29), wherein the compressor assembly (10) comprises at least one hub-side compression chamber (40, 42), the volume of which can be changed by a translational movement of a compressor component (36, 38), wherein a pressure medium to be conducted into the tyre cavity (24) can be placed under pressure by a reduction in the volume of the compression chamber (40, 42), and wherein the compressor assembly (10) comprises a transmission, preferably a cam mechanism (45), which is configured, by interaction of a wheel-carrier-side transmission part (44) with a hub-side transmission part (34), to convert a rotational movement (60) between the wheel-carrier side and the wheel-hub side into an oscillating translational movement (62) of the compressor component (36, 38), wherein the wheel-carrier-side transmission part (44) comprises a cylindrical cam (50), in particular a beaded cylindrical cam (50), or the hub-side transmission part (34) comprises a beaded cylindrical cam (50), **characterized in that**
the hub-side transmission part (34) comprises a contact device (46, 48), wherein, upstream and downstream of the beaded cylindrical cam (50) of the wheel-carrier-side transmission part (44), as seen in the direction of the axis of rotation (29), the contact device (46, 48) has a contact element (46, 48) for making contact with the beaded cylindrical cam (50) of the wheel-carrier-side transmission part (44) .

2. Compressor assembly (10) according to Claim 1,
wherein
the hub-side transmission part (34) comprises a tappet output (34).

3. Compressor assembly (10) according to Claim 1 or 2,
wherein
the translational movement of the compressor component (36, 38) takes place at least partially in the direction of the axis of rotation (29), preferably completely in the direction of the axis of rotation (29).

4. Compressor assembly (10) according to one of the preceding claims,
wherein the hub-side transmission part (34) comprises a contact device (46) with a contact element (46) for making contact with the beaded cylindrical cam (50) along a variable contact portion (152).

5. Compressor assembly (10) according to one of the preceding claims,
wherein the compressor component (38) comprises an annular piston (36).

6. Compressor assembly (10) according to one of the preceding claims,
wherein a compression chamber (40, 42) is in each case arranged upstream and downstream of a contact portion (152) of the hub-side transmission part (34) with the cylindrical cam (50) of the wheel-carrier-side transmission part (44), as seen along the axis of rotation (29).

7. Compressor arrangement (10) according to one of the preceding claims,
wherein the wheel-carrier-side transmission part (44) is arranged radially inwards from the hub-side transmission part (34); or
the wheel-carrier-side transmission part (44) is arranged radially outwards from the hub-side transmission part (34).

8. Compressor assembly (10) according to one of the preceding claims,
wherein the wheel-carrier-side transmission part (44) comprises a beaded cylindrical cam (50) with a circular disc portion (130).

9. Compressor assembly (10) according to one of the preceding claims,
wherein the hub-side transmission part (34) comprises a roller tappet with a, preferably self-lubricating, roller (120), in particular which is provided with a lubricant reservoir (125).

10. Compressor assembly (10) according to one of the preceding claims,
wherein a flutter valve (95) is arranged at the compressor component (36, 38); and/or
a double ring seal (102) is arranged at the compressor component (38, 36), said double ring seal bounding a lubricant reservoir of the compressor component and at the same time sealing the compression chamber against the compressor component.

11. Compressor assembly (10) according to Claim 10,
wherein the flutter valve (95) is formed integrally with at least a part of the double ring seal (102).

12. Compressor assembly (10) according to one of the preceding claims,
wherein it comprises a coupling device (54) by means of which the hub-side transmission part (34) can be brought into interaction with the wheel-carrier-side transmission part (44).

13. Compressor assembly (10) according to one of the preceding claims,
wherein the coupling device (54) is designed in such a manner that the hub-side transmission part (34) is prestressed into a position in which it does not interact with the wheel-carrier-side transmission part (44); and/or
the coupling device (54) is actuable pneumatically, magnetically or electromechanically; and/or
the coupling device (54) is actuable by means of pressure medium from the tyre cavity (24).

14. Compressor assembly (10) according to one of the preceding claims,
wherein a coupling valve (70, 310) is fluidically provided between the coupling device (54) and the tyre cavity (24), against which coupling valve the pressure medium from the tyre cavity (24) lies and which opens when the tyre pressure falls below a tyre pressure limit value, as a result of which the coupling device (54) is actuated by means of pressure medium from the tyre cavity (24), and the hub-side transmission part (34) is brought into interaction with the wheel-carrier-side transmission part (44), wherein preferably the coupling valve (70) closes when the tyre pressure exceeds a tyre pressure desired value, preferably lies above the tyre pressure threshold value, as a result of which the action upon the coupling device (54) with pressure medium is interrupted, preferably wherein the coupling valve (70, 310) or a relief valve (74, 320) vents the coupling device (54) when the tyre pressure exceeds the tyre pressure desired value.

15. Compressor assembly (10) according to one of the preceding claims,
wherein it comprises a device (210) for measuring and/or displaying the pressure, the temperature and/or the humidity of the pressure medium in the tyre cavity (24), preferably which is connectable to the tyre cavity (24) via the pressure medium line (22); and/or
it is connected on the pressure-medium-inlet side to a filter (200); and/or it is designed to use pressure medium from the tyre cavity (24) or by supplying by the compressor assembly (10) for cleaning the filter (200).

## Revendications

1. Ensemble formant compresseur (10) destiné à alimenter en milieu sous pression une cavité (24) d'un pneumatique d'une roue de véhicule pouvant être montée sur un moyeu de roue (18), le moyeu de roue (18) pouvant être logé sur un support de roue (16) de manière à pouvoir tourner sur un axe de rotation (29), l'ensemble formant compresseur (10) comprenant au moins un espace de compression côté moyeu (40, 42) dont le volume peut être modifié par un mouvement de translation d'un composant de compresseur (36, 38), un milieu sous pression à acheminer dans la cavité de pneumatique (24) peut être pressurisé par une réduction de volume de l'espace de compression (40, 42), et l'ensemble formant compresseur (10) comprenant une transmission, de préférence une transmission à cames (45), qui est conçue pour convertir un mouvement de rotation (60) entre le côté support de roue et le côté moyeu de roue en un mouvement de translation oscillant (62) du composant de compresseur (36, 38) par coopération d'un élément de transmission côté support de roue (44) avec un élément de transmission côté moyeu (34), l'élément de transmission côté support de roue (44) comprenant une came cylindrique (50), en particulier une came de talon cylindrique (50), ou l'élément de transmission côté moyeu (34) comprenant une came de talon cylindrique (50),
**caractérisé en ce que**
l'élément de transmission côté moyeu (34) comprend un dispositif de contact (46, 48), le dispositif de contact (46, 48) comportant un élément de contact (46, 48) à chaque fois devant et derrière la came de talon cylindrique (50) de l'élément de transmission côté support de roue (44), lorsque l'on regarde dans la direction de l'axe de rotation (29) pour entrer en contact avec la courbe de cylindre de talon (50) de l'élément de transmission côté support de roue (44).

2. Ensemble formant compresseur (10) selon la revendication 1,
l'élément de transmission côté moyeu (34) comprenant une sortie de poussoir (34).

3. Ensemble formant compresseur (10) selon la revendication 1 ou 2,
le mouvement de translation du composant de compresseur (36, 38) est effectué au moins partiellement dans la direction de l'axe de rotation (29), de préférence entièrement dans la direction de l'axe de rotation (29) .

4. Ensemble formant compresseur (10) selon l'une des revendications précédentes, l'élément de transmission côté moyeu (34) comprenant un dispositif de contact (46) pourvu d'un élément de contact (46) destiné à venir en contact avec la came de talon cylindrique (50) le long d'une portion de contact variable (152).

5. Ensemble formant compresseur (10) selon l'une des revendications précédentes, le composant de compresseur (38) comprenant un piston annulaire (36).

6. Ensemble formant compresseur (10) selon l'une des revendications précédentes, un espace de compression (40, 42) étant disposé, lorsque l'on regarde dans l'axe de rotation (29), devant et derrière une portion de contact (152) de l'élément de transmission côté moyeu (34) avec la came cylindrique (50) de l'élément de transmission côté support de roue (44).

7. Ensemble formant compresseur (10) selon l'une des revendications précédentes, l'élément de transmission côté support de roue (44) étant disposé radialement vers l'intérieur de l'élément de transmission côté moyeu (34) ; ou
l'élément de transmission côté support de roue (44) étant disposé radialement vers l'extérieur de l'élément de transmission côté moyeu (34).

8. Ensemble formant compresseur (10) selon l'une des revendications précédentes, l'élément de transmission côté support de roue (44) comprenant une came de talon cylindrique (50) pourvue d'une portion de disque circulaire (130).

9. Ensemble formant compresseur (10) selon l'une des revendications précédentes, l'élément de transmission côté moyeu (34) comprenant un poussoir à galet pourvu d'un galet (120), de préférence autolubrifiant, en particulier qui est pourvu d'un réservoir lubrifiant (125) .

10. Ensemble formant compresseur (10) selon l'une des revendications précédentes, une soupape à flottement (95) étant disposée sur le composant de compresseur (36, 38) ; et/ou
une double garniture d'étanchéité annulaire (102) étant disposée sur le composant de compresseur (38, 36) et délimitant un réservoir de lubrifiant du composant de compresseur et en même temps étanchéifiant l'espace de compression vis-à-vis du composant de compresseur.

11. Ensemble formant compresseur (10) selon la revendication 10,
la soupape à flottement (95) étant formée d'une seule pièce avec au moins une partie de la double garniture d'étanchéité annulaire (102).

12. Ensemble formant compresseur (10) selon l'une des revendications précédentes, celui-ci comprenant un dispositif d'accouplement (54) à l'aide duquel l'élément de transmission côté moyeu (34) peut être amené à coopérer avec l'élément de transmission côté support de roue (44).

13. Ensemble formant compresseur (10) selon l'une des revendications précédentes, le dispositif d'accouplement (54) étant conçu de façon à précontraindre l'élément de transmission côté moyeu (34) dans une position dans laquelle il ne coopère pas avec l'élément de transmission côté support de roue (44) ; et/ou
le dispositif d'accouplement (54) pouvant être actionné pneumatiquement, magnétiquement ou électro-mécaniquement ; et/ou
le dispositif d'accouplement (54) pouvant être actionné à l'aide d'un milieu sous pression provenant de la cavité de pneumatique (24).

14. Ensemble formant compresseur (10) selon l'une des revendications précédentes, une soupape d'accouplement (70, 310) étant prévue qui est en communication fluidique entre le dispositif d'accouplement (54) et la cavité de pneumatique (24), sur laquelle le milieu sous pression provenant de la cavité de pneumatique (24) est appliqué et qui s'ouvre en cas de franchissement vers le bas de la valeur de seuil de pression du pneumatique, le dispositif d'accouplement (54) étant actionné à l'aide d'un milieu sous pression provenant de la cavité de pneumatique (24) et l'élément de transmission côté moyeu (34) étant amené à coopérer avec l'élément de transmission côté support de roue (44), de préférence la soupape d'accouplement (70) se fermant en cas de franchissement vers le haut d'une valeur de pression de pneumatique de consigne, de préférence qui est supérieure à la valeur de seuil de pression de pneumatique, ce qui interrompt l'alimentation du dispositif d'accouplement (54) en milieu sous pression, de préférence la soupape d'accouplement (70, 310) ou une soupape de décharge (74, 320) purgeant le dispositif d'accouplement (54) en cas de franchissement vers le haut de la valeur de pression de pneumatique de consigne.

15. Ensemble formant compresseur (10) selon l'une des revendications précédentes, ledit ensemble comprenant un dispositif (210) de mesure et/ou d'affichage de la pression, de la température et/ou de l'humidité du milieu sous pression dans la cavité de pneumatique (24), de préférence ledit dispositif pouvant être relié à la cavité de pneumatique (24) par le biais de la conduite de milieu sous pression (22) ; et/ou
ledit ensemble étant relié à un filtre (200) côté entrée de milieu sous pression ; et/ou
ledit ensemble étant conçu pour utiliser le milieu sous pression provenant de la cavité de pneumatique (24) ou transporté à travers l'ensemble formant compresseur (10) pour nettoyer le filtre (200).
